(19) Europäisches Patentamt
European Patent Office
Office européen des brevets

(11) **EP 2 102 047 B1**

(12) **EUROPÄISCHE PATENTSCHRIFT**

(45) Veröffentlichungstag und Bekanntmachung des Hinweises auf die Patenterteilung:
**10.10.2012 Patentblatt 2012/41**

(21) Anmeldenummer: **07822760.0**

(22) Anmeldetag: **20.11.2007**

(51) Int Cl.:
**B60T 8/1766** (2006.01)    **B60T 13/74** (2006.01)
**F16D 65/14** (2006.01)

(86) Internationale Anmeldenummer:
**PCT/EP2007/062590**

(87) Internationale Veröffentlichungsnummer:
**WO 2008/071523 (19.06.2008 Gazette 2008/25)**

(54) **AUSGEGLICHENE KEILREGELUNG**

COMPENSATED WEDGE CONTROL

RÉGULATION ÉQUILIBRÉE DE CALES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **12.12.2006 DE 102006058565**

(43) Veröffentlichungstag der Anmeldung:
**23.09.2009 Patentblatt 2009/39**

(73) Patentinhaber: **Continental Automotive GmbH 30165 Hannover (DE)**

(72) Erfinder: **SEMSEY, Akos 93049 Regensburg (DE)**

(56) Entgegenhaltungen:
**DE-A1- 10 218 825       FR-A- 2 885 976
US-A1- 2003 205 438    US-B1- 6 305 506**

**Beschreibung**

Die Erfindung betrifft die Regelung der Bremskraft, die von einer mehrere elektromechanische Keilbremsen umfassenden Bremsanlage aufgebracht wird. Die Erfindung bezieht sich insbesondere auf die Regelung bzw. Steuerung der von der Bremsanlage aufgebrachten Bremskraft während eine Untergruppe der Bremsen der Bremsanlage von einer ersten Betriebsstellung in eine zweite Betriebsstellung überführt wird.

Bei elektromechanischen Keilbremsen wird der Reibbelag mittels eines elektrisch steuerbaren Aktors entlang einer Keilfläche schräg auf den meist als Bremsscheibe ausgeführten Bremsgegenstand geführt. Es sind mehrere Varianten einer selbstverstärkenden elektromechanischen Keilbremse bekannt.

Die Grundkomponenten einer Keilbremse werden im Allgemeinen von einer passiven Keilplatte, einer aktiven Keilplatte und einem Aktor zum Bewegen der aktiven Keilplatte relativ gegenüber dem Bremsgegenstand gebildet. Die aktive Keilplatte dient meist als Abstützung und als Führung für den Reibbelag, sodass der Reibbelag über die Verschiebung der aktiven Keilplatte zum abzubremsenden Gegenstand hin bzw. weg geführt werden kann. Zur Verminderung der Reibung zwischen aktiver und passiver Keilplatte kann zwischen den sich gegenüberstehenden Keilflächen ein Wälzlager oder dergleichen angeordnet sein.

Damit besitzen Keilbremsen grundsätzlich eine Abstützung des Reibbelags, die schräg zur Laufrichtung des Bremsgegenstands verläuft. Hierzu befinden sich an der Abstützung regelmäßig eine oder mehrere so genannte Keilflächen, entlang deren die Führung des Reibbelags erfolgt. Tritt der Reibbelag mit dem Bremsgegenstand in Kontakt, so wird er von diesem in dessen Bewegungsrichtung mitgenommen. Weist die Neigung der Keilfläche in die Bewegungsrichtung des Bremsgegenstands, so führt das Mitnehmen des Reibbelags zu einem weiteren Heranführen des Reibbelags an den Bremsgegenstand. Hierdurch verstärkt sich der Druck des Reibbelags auf den Bremsgegenstand, wodurch eine Erhöhung der abbremsenden Reibkraft erreicht wird. Die Bremskraft verstärkt sich somit selbständig durch die über den Bremsgegenstand eingebrachte Bewegungsenergie, ohne dass das Reibglied aktiv über den Aktor weiter zum Gegenstand verlagert werden muss. Dieser Effekt ist allgemein als Selbstverstärkung bekannt. Eine mathematische Behandlung des Selbstverstärkungseffekts ist in der Patentschrift

EP 0 953 785 angegeben. Demnach erniedrigt sich die für eine bestimmte Bremskraft $F_B$ - das ist die am Reibglied entstehende Reibkraft - von dem Aktor in die Keilanordnung einzubringende Kraft $F_E$ nach der Gleichung:

$$F_E = -F_B \cdot [1-(\tan\alpha/\mu)]. \qquad (1)$$

In Gleichung (1) geben $\alpha$ den Winkel der Keilfläche mit der Bewegungsebene und $\mu$ die Reibungszahl für das Werkstoffpaar Reibungsbelag/Oberfläche des Bremsgegenstands an.

Bei Umkehr der Bewegungsrichtung des Bremsgegenstands weist die Neigung der Keilfläche von der Bewegungsrichtung des Bremsgegenstands weg, so dass der Druck des Reibbelags auf den Bremsgegenstand vermindert wird. Es tritt eine Schwächung der von dem Aktor eingebrachten Kraft auf. Die resultierende maximale Bremskraft ist daher geringer als bei einer Bewegung des Bremsgegenstands in Richtung der Neigung der Keilfläche.

Um auch bei dieser entgegensetzten Bewegungsrichtung des Bremsgegenstands eine maximale Bremswirkung erzielen zu können, weisen elektromechanische Keilbremsen eine oder mehrere weitere Keilflächen auf, deren Neigung die aktive Keilplatte bei einer Bewegung in diese entgegengesetzte Richtung zum Bremsgegenstand hinführt.

Die Keilflächen der aktiven Keilplatte sind üblicherweise auf der dem Reibbelag gegenüber angeordneten Seitenfläche der Keilplatte angeordnet. Die Verschiebung der aktiven Keilplatte durch den Aktor wird über ein Übertragungselement bewirkt, das die aktive Keilplatte mit dem Aktor verbindet. Die passive Keilplatte ist dagegen relativ zum Aktor ortsfest gelagert, beispielsweise an einem Bremssattel der elektromechanischen Keilbremse. Deren Keilflächen sind den Keilflächen der aktiven Keilplatte gegenüber angeordnet.

Bei höheren Fahrzeuggeschwindigkeiten müssen die Bremsen eines Fahrzeugs die maximal mögliche Bremskraft erzeugen können. Bei Verwendung elektromechanischer Keilbremsen bedeutet dies, dass sich die Keilplatten beim Bremsen in der Betriebstellung für eine Selbstverstärkung befinden, d.h. dass die aktive Keilplatte in Richtung der Bewegung der Bremsscheibe verschoben wird. Die maximale Bremskraft wird erreicht, wenn alle Keilbremsen des Fahrzeugs in Richtung einer Selbstverstärkung für die jeweilige Fahrtrichtung, d.h. gleichsinnig gestellt werden.

Bei einem stehenden Fahrzeug muss dagegen sichergestellt werden, dass das Fahrzeug in keine der beiden möglichen Bewegungsrichtungen rollen kann. Hierzu werden die Keilbremsen des Fahrzeugs gegensinnig verstellt, d.h. eine Untergruppe der Bremsen der Bremsanlage des Fahrzeugs wird in eine Betriebart mit Selbstverstärkung in Vorwärtsrichtung des Fahrzeugs, eine andere Untergruppe der Bremsen in eine Betriebsstellung mit Selbstverstärkung in Rückwärtsrichtung des Fahrzeugs überführt. Eine Bewegung des Fahrzeugs aufgrund einer Unebenheiten oder Neigungen der Fahrbahn ist damit ausgeschlossen, da sich die Bremskraft bei einer Untergruppe der Bremsen stets selbst verstärkt und dadurch in der Lage ist, das Fahrzeug im Stillstand zu halten.

Beim Übergang von der Bewegung eines Fahrzeugs in dessen Stillstand treten jedoch Probleme auf. Wird ein Fahrzeug beispielsweise abgebremst um es nach einem gewissen Bremsweg in den Stillstand zu versetzen, so könnte nach dem Stehen bleiben das Fahrzeug bei einer Neigung der Fahrbahn entgegen der ursprünglichen Fahrtrichtung wieder zurückrollen, da alle Keilbremsen für Selbstverstärkung in die ursprüngliche Fahrtrichtung ausgerichtet sind und in die entgegengesetzte Fahrtrichtung nur eine geringe Bremskraft aufbringen. Daher werden die Keilbremsen des Fahrzeugs vor dessen Stillstand gegensinnig verstellt, d.h. eine Untergruppe der Bremsen wird in Richtung einer Selbstverstärkung entgegen der aktuellen Fahrtrichtung verstellt.

Während des Umschaltens einer Keilbremse von der Selbstverstärkungsrichtung in die Selbstschwächungsrichtung durchläuft die aktive Keilplatte die Neutralstellung, bei der der Reibbelag den Bremsgegenstand nicht mehr berührt. Die Bremskraft in der Neutralstellung ist daher gleich Null. Erst bei erneuter Berührung des Bremsgegenstands erzeugt der Reibbelag wieder eine Bremskraft, die aufgrund des nun herrschenden Selbstschwächungseffekts geringer sein kann, als die zuvor unter Nutzung des Selbstverstärkungseffekts erzeugte. Im Ergebnis verändert sich die von einer Bremse während der Umstellung von der Betriebsstellung mit Selbstverstärkung in die Betriebsstellung ohne Selbstverstärkung erzeugte Bremskraft. Diese Bremskraftänderung wird von Fahrzeuginsassen als ein den Fahrkomfort beeinträchtigender Ruck empfunden.

Im umgekehrten Fall, beim einem langsamen oder nur teilweisen Lösen der Keilbremsen eines an einem Gefälle stehenden Fahrzeugs, müssen die gegen die Rollrichtung gestellten Keilbremsen vor Erreichen einer bestimmten Schwellgeschwindigkeit des Fahrzeugs in Richtung einer Selbstverstärkung für die Rollrichtung umgestellt werden. Auch hier tritt eine vorübergehende Abnahme der Bremskraft auf, die im Fahrzeuginneren als Ruck spürbar ist.

In der Patentschrift US 6,305,506 B1 wird eine Bremsanlage für ein Fahrzeug offenbart, dessen Bremsen als selbstverstärkende Keilbremsen ausgebildet sind. Die Keilbremsen der Fahrzeugbremsanlage weisen für eine der Fahrzeugbewegungsrichtungen eine Selbstverstärkung auf. Die Steuerung der von den Bremsen aufgebrachten Bremskraft erfolgt so, dass auf den Hinterrädern im Vergleich zu den Vorderrädern des Fahrzeugs unterschiedliche Bremskräfte erzeugt werden, die Summe der Bremskräfte jedoch einer vorgegebnen Bremskraft entspricht.

In der Druckschrift US 2003/0205438 A1 wird eine elektromechanische Keilbremse vorgestellt, bei der sowohl der als Keilplatte ausgeführte Reibbelagträger als auch die als Doppelkeilplatte ausgeführte Gegenplatte mithilfe von Aktoren parallel zur Laufrichtung der Bremsscheibe verschoben werden können. Wenn sowohl die Keilplatte als auch die Gegenplatte in die gleiche Richtung verschoben werden, tritt keine Selbstverstärkung auf. Werden die beiden Platten jedoch durch einen oder beide der Aktoren gegensinnig zueinander verschoben, so tritt eine Selbstverstärkung auf. Eine Selbstverstärkung der Bremskraft ist nur für eine der Bewegungsrichtungen des abzubremsenden Gegenstands gegeben. Die Regelung einer mit derartigen Keilbremsen ausgestatteten Fahrzeugbremsanlage wird gemäß dieser Druckschrift so vorgenommen, dass die an den Vorderradbremsen erzeugte Bremskraft höher als die an den Hinterradbremsen erzeugte ist, wobei beide Bremskräfte auf der Grundlage der gewünschten Fahrzeugverzögerung berechnet werden.

In der französischen Offenlegungsschrift FR 2 885 976 wird beschrieben, wie durch eine Korrektur der Keilwege an den Keilbremsen eines linken und eines rechten Fahrzeugrades gleiche Bremsmomente an beiden Rädern eingestellte werden können, wenn durch unterschiedliche Reibwerte an den beiden Bremsen gleiche Keilwege zu unterschiedlichen Bremskräften führen. Führungsgröße für die Bremsmomentkorrektur ist jeweils die an einer der Bremsen erzielte Bremskraft. Die Bremskraft der anderen Bremse wird so nachgeregelt, dass beide Keilbremsen gleiche Bremsmomente erzeugen. Der absolute Wert des von beiden Keilbremsen erzeugten Bremsmoments wird nicht konstant gehalten, sondern es ist Aufgabe des Fahrzeugführers, entsprechende Korrekturen vorzunehmen.

Die in der Offenlegungsschrift DE 102 18 825 A1 beschriebene Kraftfahrzeugbremsenanlage umfasst zumindest zwei selbstverstärkende Keilbremsen, von denen bei Aktivierung einer Parkbremsfunktion eine in Vorwärtsrichtung und eine in Rückwärtsrichtung des Fahrzeugs selbstverstärkend wirkt. Um in Rückwärtsrichtung selbstverstärkend zu wirken, wird die entsprechende Keilfläche unter Belastung gesetzt.

Ausgehend hiervon liegt der Erfindung die Aufgabe zugrunde, eine Steuerung für eine auf elektromechanischen Keilbremsenbasierende Fahrzeugbremsanlage anzugeben, die ein Umstellen einer Untergruppe der Keilbremsen von einer ersten Betriebsstellung in eine zweite Betriebsstellung ohne Beeinträchtigung des Fahrkomforts, wie z.B. Rucken, ermöglicht.

Die Aufgabe wird gemäß den unabhängigen Ansprüchen der Erfindung gelöst.

Die Erfindung umfasst ein Verfahren zur Steuerung von elektromechanischen Bremsen einer Fahrzeugbremsanlage, wobei die Bremsen eine erste Betriebsstellung aufweisen, in der eine Selbstverstärkung der Bremswirkung für eine Vorwärtsbewegung eines die Fahrzeugbremsanlage umfassenden Fahrzeugs erzielt wird, und eine zweite Betriebsstellung aufweisen, in der eine Selbstverstärkung der Bremswirkung für eine Rückwärtsbewegung des Fahrzeugs erzielt wird, und das Verfahren Schritte umfasst zum Überführen einer ersten Untergruppe der elektromechanischen Bremsen von einer der beiden Betriebsstellungen in die jeweils andere Betriebsstellung und zum Verändern der von einer zweiten Untergruppe der elektromechanischen Bremsen bewirkten Bremskraft während des Überführens der ersten Untergruppe der elektromechanischen Bremsen von einer der beiden Betriebsstellungen in die jeweils andere Betriebsstellung so, dass die von der Fahrzeugbremsanlage insgesamt aufgebrachte Bremskraft im Wesentlichen der Bremskraftvorgabe für die Fahrzeugbremsanlage entspricht.

In diesem Zusammenhang wird darauf hingewiesen, dass die in dieser Beschreibung und den Ansprüchen zur Aufzählung von Merkmalen verwendeten Begriffe "umfassen", "aufweisen", "beinhalten" und "mit", sowie deren grammatikalische Abwandlungen, generell das Vorhandensein von Merkmalen, wie z.B. Verfahrensschritten, Einrichtungen, Bereichen, Größen und dergleichen mehr angeben, jedoch in keiner Weise das Vorhandensein anderer oder zusätzlicher Merkmale oder Gruppierungen von anderen oder zusätzlichen Merkmalen ausschließen. Ferner sei darauf hingewiesen, dass die Begriffe Steuern und Regeln in dieser Schrift abweichend vom üblichen deutschen Sprachgebrauch synonym verwendet werden. Unter den Begriff Steuern sind daher genauso auch Vorgänge mit einer Rückführung der Regelgröße zu subsumieren, wie unter dem Begriff Regeln auch Vorgänge ohne Rückführung der Regelgröße zu subsumieren sind.

Die Erfindung umfasst ferner eine Vorrichtung zur Steuerung von elektromechanischen Bremsen einer Fahrzeugbremsanlage, wobei die Bremsen eine erste Betriebsstellung aufweisen, in der eine Selbstverstärkung der Bremswirkung für eine Vorwärtsbewegung eines die Fahrzeugbremsanlage umfassenden Fahrzeugs erzielt wird, und eine zweite Betriebsstellung aufweisen, in der eine Selbstverstärkung der Bremswirkung für eine Rückwärtsbewegung des Fahrzeugs erzielt wird, und die Vorrichtung eine Umstelleinrichtung zum Überführen einer ersten Untergruppe der elektromechanischen Bremsen von einer der beiden Betriebsstellungen in die jeweils andere Betriebsstellung sowie eine Bremskraftveränderungs-Einrichtung zum Verändern der von einer zweiten Untergruppe der elektromechanischen Bremsen bewirkten Bremskraft während des Überführens der ersten Untergruppe der elektromechanischen Bremsen von einer der beiden Betriebsstellungen in die jeweils andere Betriebsstellung so, dass die von der Fahrzeugbremsanlage insgesamt aufgebrachte Bremskraft im Wesentlichen der Bremskraftvorgabe für die Fahrzeugbremsanlage entspricht.

Die Erfindung ermöglicht eine Keilumstellung bei einer Untergruppe der elektromechanischen Keilbremsen eines Fahrzeugs vorteilhaft so, dass kein Rucken des Fahrzeugs aufgrund einer Bremskraftveränderung auftritt.

Die Erfindung wird in ihren abhängigen Ansprüchen weitergebildet.

Die Aufrechterhaltung der Gesamtbremskraft kann in einer vorteilhaften Weiterbildung vorteilhaft durch ein Verändern der Bremskraft der zweiten Untergruppe der elektromechanischen Keilbremsen erfolgen, das im Wesentlichen die Abweichung der Bremskraft der ersten Untergruppe der elektromechanischen Keilbremsen von der Bremskraftvorgabe für die erste Untergruppe der elektromechanischen Keilbremsen kompensiert. Eine unkomplizierte Steuerung wird dabei erreicht, wenn das Verändern der Bremskraft der zweiten Untergruppe der elektromechanischen Keilbremsen auf der Grundlage einer vorgegebenen Funktion erfolgt, die die Abweichung der Bremskraft der ersten Untergruppe der elektromechanischen Keilbremsen von der Bremskraftvorgabe für die erste Untergruppe der elektromechanischen Keilbremsen während des Umstellens von der ersten Betriebsstellung in die zweite Betriebsstellung angibt.

In einer vorteilhaften Weiterbildung wird das Verändern der Bremskraft der zweiten Untergruppe der elektromechanischen Keilbremsen auf der Grundlage einer Messung der aktuellen Bremskraft von wenigstem der ersten Untergruppe der elektromechanischen Keilbremsen vorgenommen, so dass die Bremskraftänderung der zweiten Untergruppe der Keilbremsen unmittelbar auf die Grundlage der Zielgröße gestellt werden kann.

Zur Anpassung der Bremskraftverteilung zwischen der ersten und der zweiten Untergruppe der elektromechanischen Keilbremsen an die Anforderungen an die aktuelle Fahrdynamik erfolgt das Umstellen der ersten Untergruppe der elektromechanischen Keilbremsen und das Verändern der Bremskraft der zweiten Untergruppe der elektromechanischen Keilbremsen während des Umstellens günstigerweise so, dass die Verteilung der von der Fahrzeugbremsanlage aufgebrachten Bremskraft auf die erste und die zweite Untergruppe der elektromechanischen Keilbremsen nach erfolgtem Umstellen einer vorgegebenen Verteilung entspricht.

Vorzugsweise erfolgt das Umstellen der ersten Untergruppe der elektromechanischen Keilbremsen bei einer bestimmten Fahrzeuggeschwindigkeit, um die Fahrdynamik des Fahrzeugs nicht negativ zu beeinflussen. Das Umstellen der ersten Untergruppe der elektromechanischen Bremsen kann zweckmäßig auch bei einer bestimmten fahrdynamischen Bedingung erfolgen, sodass z.B. bei einem Schleudern des Fahrzeugs eine gute Bremswirkung in die neue Bewegungsrichtung des Fahrzeugs erzielt wird.

Weitere Merkmale der Erfindung ergeben sich aus der folgenden Beschreibung erfindungsgemäßer Ausführungsbeispiele in Verbindung mit den Ansprüchen sowie den Figuren. Die einzelnen Merkmale können bei einer Ausführungsform gemäß der Erfindung je für sich oder zu mehreren verwirklicht sein. Bei der nachfolgenden Erläuterung einiger Ausführungsbeispiele der Erfindung wird auf die beiliegenden Figuren Bezug genommen, von denen

Figur 1     drei Betriebstellungen einer Keilbremse in einer schematischen Darstellung zeigt,

Figur 2     eine gegensinnige Verstellung der Keilbremsen bei einem vierrädrigen Fahrwerk veranschaulicht,

Figur 3     eine gleichsinnige Verstellung der Keilbremsen bei einem schematisiert dargestellten vierrädrigen Fahrwerk zeigt,

Figur 4     einen Bremskraftverlauf zweier Bremsgruppen veranschaulicht, bei dem die Gesamtbremskraft konstant bleibt,

Figur 5     das Umschalten der Betriebsstellung von einer Stellung für Selbstverstärkung in Rückwärtsrichtung in eine Stellung für Selbstverstärkung in Vorwärtsrichtung zeigt, und

Figur 6     eine beispielsgemäße Bremssteuervorrichtung zeigt.

Bremsen mit einer Einrichtung zur Selbstverstärkung sind seit langen bekannt. Bei einer Duo-Servo-Bremse wird beispielsweise eine gegenüber der Simplex-Bremse höhere Selbstverstärkung der eingebrachten Betätigungskraft erreicht, indem die Selbstverstärkung der auflaufenden Bremsbacke zum Anpressen der zweiten auch auflaufenden Bremsbacke ausgenützt wird. Bei elektromechanischen Bremsen bietet ein Selbstverstärkungseffekt die Möglichkeit, die zum Bremsen aufzuwendende Energie zu minimieren. Favorisiert werden gegenwärtig elektromechanische Keilbremsen, die jedoch in den verschiedenen Betriebsstellungen unterschiedliche Bremswirkungen aufweisen.

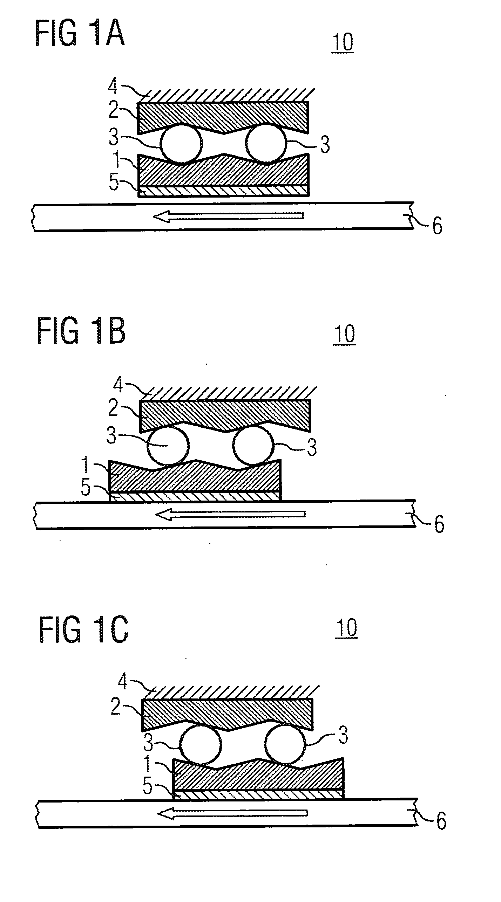

Die Figur 1 zeigt die drei unterscheidbaren Betriebsstellungen einer Keilbremse 10. In der Darstellung a ist die Keilbremse in ihrer Neutralstellung, in der Darstellung b in einer Stellung für eine Selbstverstärkung bei der mit einem Pfeil angedeuteten Bewegung des Bremsgegenstands 6 und in Darstellung c in einer Stellung für eine Selbstschwächung bei der angedeuteten Bewegung des Bremsgegenstands 6 gezeigt.

Die Keilbremse 10 selbst umfasst zwei Keilplatten 1 und 2, zwischen denen Elemente 3 angeordnet sein können, die eine reibungsarme Verschiebung der beiden Keilplatten 1 und 2 gegeneinander ermöglichen. Eine der Keilplatten ist an einem feststehenden Träger 4, üblicherweise einem Bremssattel befestigt. Sie wird als passive Keilplatte 2 bezeichnet. Die andere Keilplatte ist gegenüber dem feststehenden Träger verschiebbar angeordnet und wird als aktive Keilplatte 1 bezeichnet. An der den Elementen 3 abgewandten Seitenfläche trägt die aktive Keilplatte 1 einen Reibbelag 5.

Die einander zugewandten Seitenflächen der Keilplatten 1 und 2 weisen so genannte Keilflächen auf, die in den Darstellungen der Figur 1 als gegenüber der Horizontalen geneigte Linienzüge erkennbar sind. Die Keilflächen umfassen an jeder der Keilplatten jeweils ein oder mehrere Paare zueinander geneigter Einzelflächen. Dabei sind in der Neutralstellung der Keilbremse 10 die Keilflächenpaare der Keilplatte 1 den Keilflächenpaaren der Keilplatte 2 im Wesentlichen spiegelsymmetrisch gegenüberliegend angeordnet. Andere Ausführungen der Keilflächen sind möglich und bekannt, beispielsweise solche, bei denen die Keilflächen der passiven Keilplatte komplementär zu den Keilflächen der aktiven Keilplatte ausgebildet sind.

In den von den Keilflächen in den jeweiligen Keilplatten gebildeten Vertiefungen befinden sich Elemente 3, deren Umfangsform ein reibungsarmes Abrollen der Elemente 3 auf den Keilflächen erlaubt. Die Elemente 3 bilden zusammen mit den Keilflächen ein Wälzlager aus, das eine Verschiebung der aktiven Keilplatte 1 gegenüber der passiven Keilplatte 2 parallel zu einer Keilfläche ermöglicht. In der Neutralstellung ist die aktive Keilplatte 1 so weit vom Bremsgegenstand 6 entfernt, dass der Reibbelag 5 diesen nicht oder nur ohne nennenswerte Druckwirkung berührt. Die Bremswirkung der Keilbremse 10 in der Neutralstellung ist daher unabhängig von der Bewegungsrichtung des Bremsgegenstands stets vernachlässigbar oder gleich Null.

In der in der Darstellung b gezeigten Betriebsstellung der Keilbremse 10 ist die aktive Keilplatte 1 gegenüber der passiven Keilplatte 2 in Richtung der durch den Pfeil angedeuteten Bewegungsrichtung des Bremsgegenstands verschoben. Bei dieser Verschiebung rollen die Wälzelemente 3 auf den Keilflächen beider Keilplatten ab. Aufgrund der Neigung der Keilflächen und der im Wesentlichen spiegelsymmetrischen Gegenüberstellung der Keilflächenpaare an den Keilplatten, weist die von einem (nicht gezeigten) Bremsaktor bewirkte Verschiebung der aktiven Keilplatte 1 eine vertikale Verschiebungskomponente auf. In der Folge wird der auf der aktiven Keilplatte 1 befindliche Reibbelag 5 von der passiven Keilplatte 2 weg und zu dem Bremsgegenstand 6 hin bewegt. Sobald das Reibglied mit dem Bremsgegenstand 6 in Kontakt tritt, wird es von diesem in dessen Bewegungsrichtung mitgeführt. Dieses Mitführen bewirkt ein weiteres Abrollen der Keilplatte 1 auf den Wälzelementen 3 derart, dass die Keilplatte 1 mit dem Resultat einer Bremskrafterhöhung stärker gegen den Bremsgegenstand gedrückt wird.

In der in der Darstellung c gezeigten Betriebsstellung der Keilbremse 10 ist die aktive Keilplatte 1 gegenüber der passiven Keilplatte 2 entgegen der Richtung der durch den Pfeil angedeuteten Bewegungsrichtung des Bremsgegenstands verschoben. Die Berührung des Bremsgegenstands 6 durch den Reibbelag 5 führt zu einer Mitnahme der aktiven Keilplatte in Richtung der Bewegung des Bremsgegenstands 6 wodurch sich der Druck des Reibbelags 5 auf den Bremsgegenstand 6 verringert. Die von dem Aktor eingebrachte Kraft wird geschwächt. Kehrt sich jedoch die Bewegungsrichtung des Bremsgegenstands 6 um, so kommt es in dieser Stellung der Keilplatten zu einer Selbstverstärkung der Bremskraft.

Es sind auch Konstruktionen von Keilbremsen bekannt, bei denen die Mitnahme des Reibbelags entgegengesetzt zur Selbstverstärkungsrichtung nicht auf die Keilflächenmechanik übertragen wird. In diesem Fall tritt im Fall der Darstellung c von Figur 1 keine Selbstschwächung auf, sondern nur keine Selbstverstärkung.

Die Verschiebung der aktiven Keilplatte und die Einstellung der Bremskraft erfolgt über den Bremsaktor, der von einer Bremssteuervorrichtung angesteuert wird, die schaltungstechnisch, programmtechnisch oder in einer Mischform der beiden Techniken eingerichtet sein kann.

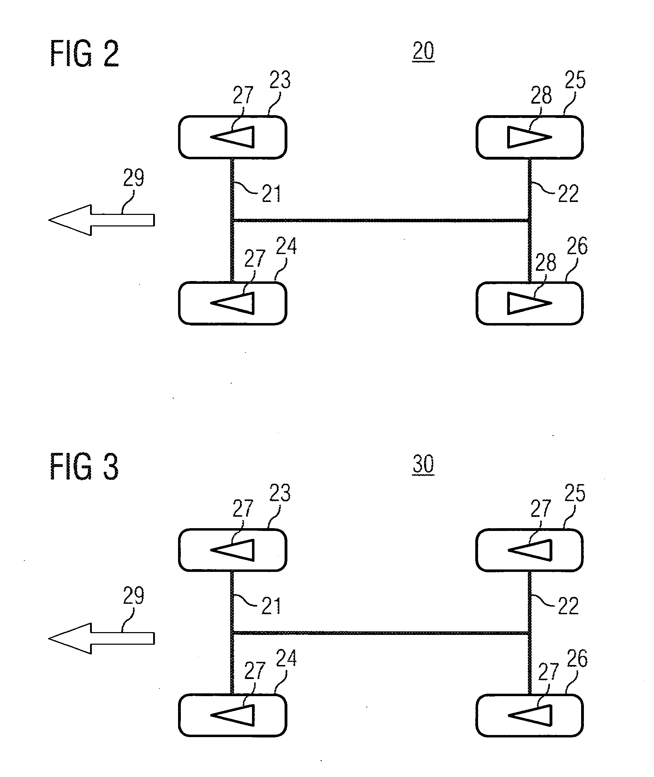

Bremsanlagen von Kraftfahrzeugen umfassen im Allgemeinen mehrere Bremsen, üblicherweise wenigstens eine Bremse pro Rad des Fahrzeugs. Hierdurch ist es möglich, beispielsweise beim Stehen oder bei kleineren Geschwindigkeiten die eingangs erwähnte Umschaltung elektromechanischer Keilbremsen vorzunehmen, um für jede der beiden möglichen Fahrtrichtungen des Fahrzeugs zumindest an einer Bremse eine Selbstverstärkung zu erhalten. Ein Beispiel für eine solchermaßen gegensinnige Verstellung 20 der Keilmechanismen der elektromechanischen Keilbremsen eines zweiachsigen Fahrzeugs mit vier Rädern ist in der Figur 2 dargestellt.

Das in der Figur 2 veranschaulichte Fahrwerk besitzt eine vordere Radachse 21 mit einem rechten Vorderrad 23 und einem linken Vorderrad 24, sowie eine hintere Radachse mit einem rechten Hinterrad 25 und einem linken Hinterrad 26. Jedes der Räder ist mit einer elektrischen Keilbremse versehen, deren Keilstellung von einer ersten Betriebsstellung 27 in eine zweite Betriebsstellung 28 umgeschaltet bzw. verstellt werden kann. Bei der Betriebsstellung 27 ist eine Selbstverstärkung der Bremskraft in Vorwärtsrichtung gegeben, bei der Betriebsstellung 28 tritt die Selbstverstärkung dagegen bei einer Rückwärtsfahrt des Fahrzeugs auf. Die Vorwärtsrichtung des Fahrzeugs ist mit einem Pfeil 29 angegeben. Die gegensinnige Verstellung der Keilbremsen wird üblicherweise für eine Feststellbremssituation verwendet, die bei Fahrzeugstillstand garantiert, dass das Fahrzeug in keiner der beiden möglichen Fahrtrichtungen wegrollen kann. Bei einer Vorwärtsfahrt des Fahrzeugs tritt bei der Betriebsstellung 28 jedoch je nach Konstruktion der Keilbremse eine Schwächung oder zumindest keine Verstärkung der über den Aktor eingebrachten Kraft auf, sodass die an den hinteren Rädern 25 und 26 aufgebrachte Bremskraft im Allgemeinen geringer ist, als an den Vorderrädern 23 und 24.

In der Figur 3 ist das Fahrwerk von Figur 2 mit einer gleichsinnigen Verstellung 30 der Keilbremsen dargestellt. Alle Keilmechanismen befinden sich in einer Betriebsstellung 27 für Selbstverstärkung der Bremskraft in Vorwärtsrichtung 29. In dieser Stellung kann jede der Bremsen die maximale Bremskraft erzeugen. Aus fahrdynamischen Gründen erfolgt die Bremskraftverteilung über die einzelnen Bremsen üblicherweise jedoch nicht gleichmäßig, sondern entsprechend der Radbelastung beim Bremsen mehr oder weniger radindividuell. Bisweilen werden die Räder der Vorderachse und die Räder der Hinterachse jeweils zu einer Bremsuntergruppe zusammengefasst, da aufgrund der Bremsstauchung die Vorderräder beim Bremsen in Vorwärtsfahrt stärker belastet werden. Jedoch sind auch andere Bremsuntergruppierungen möglich, wie beispielsweise solche, die Bremsen an diagonal am Fahrwerk angeordneten Rädern umfassen. Natürlich kann die Festlegung einer Bremsuntergruppe auch nur zeitweise geschehen, so dass zu einem Zeitpunkt die Bremsen der Vorderräder, zu einem anderen Zeitpunkt die Bremsen eines Vorderrads und eines Hinterrads zu einer Bremsuntergruppe geordnet sind.

Werden die Keilbremsen eines Fahrzeugs während einer Vorwärtsfahrt von der gleichsinnigen Betriebsstellung aller Keilsbremsen in eine gegensinnige Betriebsstellung umgeschaltet, so ist die von den Keilbremsen aufgebrachte Bremskraft, die sich in der Betriebsstellung für eine Selbstverstärkung bei Rückwärtsfahrt befinden, geringer als bei den Keilbremsen, die sich in der Betriebsstellung für eine Selbstverstärkung bei Vorwärtsfahrt befinden. Da die Belastung der Hinterräder bei einem Abbremsen eines vorwärts fahrenden Fahrzeugs im Allgemeinen geringer ist, als die der Vorderräder, werden in diesem Fall bevorzugt die Keilbremsen der Hinterräder umgeschaltet.

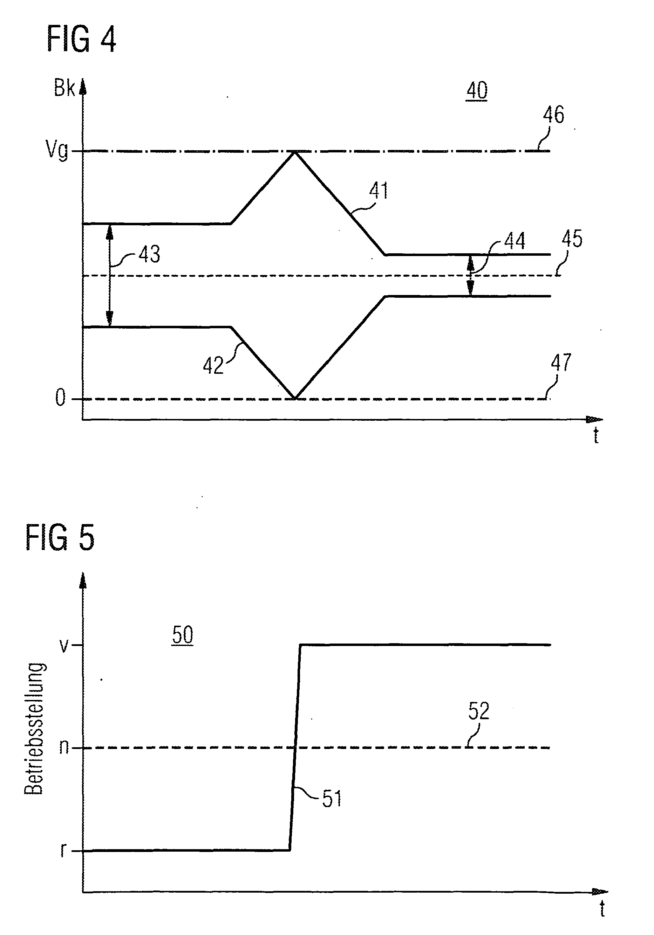

Im Diagramm 40 der Figur 4 ist der Bremskraftverlauf 42 einer Keilbremsgruppe dargestellt, die von einer Betriebsstellung für Selbstschwächung bei der gegebenen Fahrzeugbewegung in eine Betriebsstellung für Selbstverstärkung umgeschaltet. Das Diagramm 50 der Figur 5 enthält den zugehörigen Verlauf 51 der Betriebsstellung einer der zu dieser Bremsgruppe gehörenden Keilbremse. In der Figur 4 ist die Bremskraft Bk, in der Figur 5 die Betriebsstellung der aktiven Keilplatte über der Zeit t dargestellt. Die Maßstäbe der Zeitachsen beider Diagramme stimmen überein.

In der im Diagramm 50 mit r bezeichneten Rückwärtsstellung (d.h. der Betriebsstellung für Selbstverstärkung bei Rückwärtsfahrt des Fahrzeugs) ist die Bremskraft geringer als in der mit v bezeichneten Vorwärtsstellung (d.h. der Betriebsstellung für.Selbstverstärkung bei Vorwärtsfahrt des Fahrzeugs), wie sie von der anderen Bremsgruppe eingenommen wird, deren Bremskraftverlauf im Diagramm 40 von der Kurve 41 wiedergegeben wird. Entsprechend besteht eine Differenz 43 zwischen den Bremskraftbeiträgen beider Bremsgruppen, die sich zur Gesamtbremskraftvorgabe Vg addieren. Der Verlauf der Bremskraftvorgabe Vg muss nicht wie gezeigt einen konstanten Verlauf 46 aufweisen, sondern kann sich mit der Zeit verändern. Beispielsweise kann ein Fahrzeugführer die Bremskraft kurz vor dem Stehen bleiben des Fahrzeugs verringern, damit das Fahrzeug noch in die Induktionsschleife einer automatischen Ampelanlage rollen kann, oder er kann die Bremskraft verstärken, da er sonst nicht vor einem Haltestreifen zum Stehen kommen würde. Zum besseren Verständnis wird jedoch im Folgenden eine zeitlich konstante Gesamtbremskraftvorgabe Vg unterstellt. Der von jeder der Bremsgruppen bei einer gleichmäßigen Verteilung der Gesamtbremskraftvorgabe aufzubringende Verlauf der Bremskraft ist als gestrichelte Linie 45 angegeben.

Ausgangspunkt in Figur 4 und 5 ist eine Fahrzeugbremsung mitgegensinnig gestellten Keilbremsen und konstanter Gesamtbremskraftvorgabe 46, beispielsweise ein gebremstes Rollen des Fahrzeugs an einem Gefälle. Ab einer bestimmten Fahrzeuggeschwindigkeit könnte nicht mehr sichergestellt sein, dass die für eine Notbremsung erforderliche Gesamtbremskraft erreicht werden kann. Die in der selbstschwächenden bzw. nicht selbstverstärkenden Betriebsstellung befindlichen Keilplatten werden daher wie in Figur 5 gezeigt, von der Rückwärtsstellung r in die Vorwärtsstellung v überführt. Bei der Überführung nimmt die Bremskraft der Bremsen dieser Gruppe ab, bis sie bei Erreichen der Neutralstellung n den Wert Null erreicht. Damit die Gesamtbremskraft nicht von der vorgegebenen Bremskraft 46 abweicht, wird die Bremskraft an den in Vorwärtsstellung befindlichen Bremsen so erhöht, dass der Bremskraftverlust an den in Umstellung befindlichen Bremsen kompensiert wird. Entsprechend zeigt der Bremskraftverlauf 41 der in Selbstverstärkung betriebenen Bremsgruppe einen Anstieg, der spiegelbildlich zum Abfall der Bremskraft an der in Umschaltung befindlichen Bremsgruppe verläuft. Nach Überschreiten der Neutralstellung 52 nimmt die Bremskraft der umschaltenden Bremsgruppe wieder zu, bis sie, nun unter Nutzung des Selbstverstärkungseffekts, den gewünschten Endwert erreicht hat. Gleichzeitig nimmt die Bremskraft der nicht umschaltenden Bremsgruppe so ab, dass die vorgegebene Gesamtbremskraft weder überschritten noch unterschritten wird. Die nach der Überführung aller Bremsgruppen in die Betriebsstellung mit Selbstverstärkung verbleibende Differenz 44 der von den Bremsgruppen aufgebrachten Bremskraft ist, wie zuvor bereits erwähnt wurde, fahrdynamischen Überlegungen geschuldet.

Bei einem Umschalten einer Fahrzeugbremsanlage vom gleichsinnigen in den gegensinnigen Betrieb der Keilbremsen, wie es beispielsweise beim Anhalten an einer Ampel vorgenommen werden kann, werden die Kurven 41 und 42 des Diagramms 40 von rechts nach links, d.h. entgegen der Zeitachse durchlaufen. Der geradlinige Verlauf der Bremskraftänderung wurde nur als Beispiel gewählt. Es sind beliebige andere Verläufe der Bremskraftänderung möglich, solange gewährleistet ist, dass die Änderungen an den einzelnen Bremsgruppen gegensinnig synchron verlaufen, d.h. dass die Summe der von den einzelnen Bremsgruppen erzeugten Bremskräfte stets der vorgegebenen Bremskraft entspricht.

Um dies zu erreichen kann die Bremskraftvorgabe mit der tatsächlichen Verzögerung des Fahrzeugs verglichen, und die Bremskraft an den nicht umschaltenden Bremsgruppen so nachgeregelt werden, dass die Fahrzeugverzögerung der Bremskraftvorgabe entspricht.

In einer alternativen Ausführungsform wird die von der oder den umschaltenden Bremsgruppe(n) erzeugte Bremskraft erfasst, die Abweichung dieser Bremskraft von der Bremskraftvorgabe für diese Bremsgruppe(n) ermittelt, und die Bremskraft der der nicht umschaltenden Bremsgruppe(n) so nachgeregelt, dass die Abweichung kompensiert wird. Das Erfassen der Bremskraft kann durch direkte Messung der an den einzelnen Keilbremsen erzeugten Reibungskräfte oder durch indirekte Messung über damit verknüpfte Parameter, wie beispielsweise die Normalkraft, mit der der Reibbelag auf die Bremsscheibe drückt, die Aufweitung des Bremssattels oder dergleichen erfolgen. Vorteilhaft wird der Bremskraftverlauf während des Umschaltens mittels Test oder Versuchsreihen, oder über eine mathematische Modellierung des Vorgangs bestimmt. Die hierüber erhaltenen Daten geben eine Funktion des Bremskraftverlaufs wieder und werden in einer Speichereinrichtung der Bremssteuervorrichtung gespeichert. Beim Umschalten einer Bremsgruppe werden die Daten der Funktion dann zur Ermittlung der jeweils aktuellen Abweichung der Bremskraft von der Vorgabe herangezogen.

Da sich die Bremskraftverteilung auf die Bremsgruppen während des Umschaltvorgangs ändert und dadurch die Fahrdynamik beeinflusst, wird das Umstellen vorzugsweise nur bei geringen Fahrzeuggeschwindigkeiten vorgenommen. Die Umstellung der Bremsen während eines Anhaltevorgangs erfolgt dabei bevorzugt bei unterschreiten einer vorgegebenen Schwellwertgeschwindigkeit; bei einem langsamen Lösen der Bremsen dagegen bei überschreiten einer, eventuell anderen Schwellwertgeschwindigkeit. Unabhängig von der aktuellen Fahrzeuggeschwindigkeit kann das Umstellen bei bestimmten Fahrsituation wie beispielsweise einem Schleudern auf glatter Fahrbahn so erfolgen, dass die Betriebsstellung der Bremsen eine Selbstverstärkung in Richtung der tatsächlichen Fahrzeugbewegung sicherstellt.

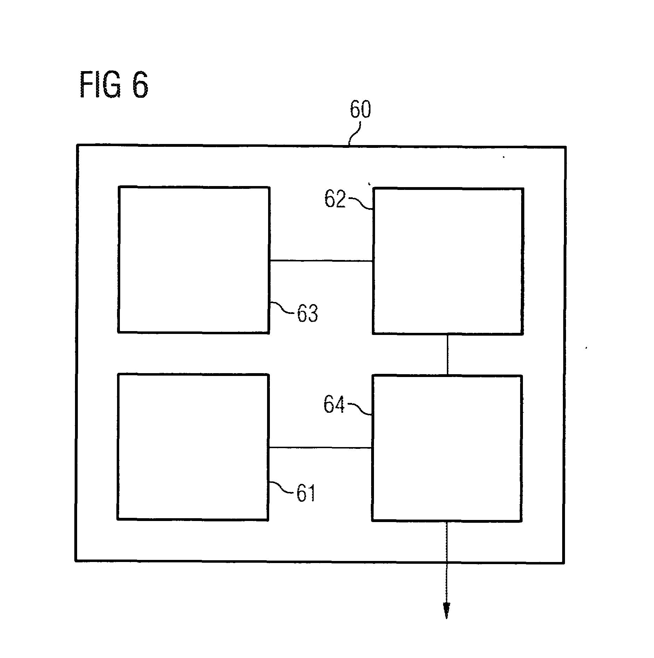

Zur Umsetzung des oben beschriebenen Verfahrens weist die Bremssteuervorrichtung 60 wie in Figur 6 dargestellt eine Umstelleinrichtung 61 und eine Bremskraftveränderungs-Einrichtung 62 auf. Die Umstelleinrichtung 61 stellt die Keilbremsen der umzustellenden Bremsgruppe bei unter- bzw. bei Überschreiten der jeweiligen Schwellwertgeschwindigkeit von der ersten Betriebsstellung in die zweite Betriebsstellung um. Wird das Fahrzeug abgebremst, so wird eine Untergruppe der Bremsen des Fahrzeugs von der Betriebsstellung mit Selbstverstärkung in die gegenwärtige Fahrtrichtung in die Betriebsstellung mit Selbstverstärkung in die entgegengesetzte Fahrtrichtung umgestellt. Vorzugsweise werden, um die Fahrdynamik nicht negativ zu beeinflussen, die Bremsen der Räder an der bezüglich der Fahrtrichtung hinteren Radachse umgestellt. Beim Anfahren oder Anrollen mit nicht vollständig gelösten Bremsen, werden die Keilbremsen umgestellt, die sich für die jeweilige Fahrtrichtung in der Betriebsstellung ohne Selbstverstärkung bzw. mit Selbstschwächung befinden.

Ist die Bremssteuervorrichtung 60 zum Nachregeln der Bremskraft auf der Grundlage eines vorgegebenen bzw. zuvor ermittelten Bremskraftverlaufs beim Umschalten ausgebildet, so weist sie zweckmäßig eine Speichereinrichtung 63 zur Speicherung der Daten des Bremskraftfunktionsverlaufs auf. Die Steuerung der Keilbremsen erfolgt über die Steuersignalausgangseinrichtung 64.

In der Figur 6 sind nur die für das Verständnis der Erfindung wesentlichen Komponenten der Bremssteuervorrichtung 60 dargestellt. Auf die Darstellung weiterer, für den Betrieb der Bremssteuereinrichtung 60 erforderlicher oder deren Funktionsumfang bestimmender Komponenten wurde bewusst im Hinblick auf eine klare Darstellung der Erfindung verzichtet.

Bezugszeichenliste

| | |
|---|---|
| 1 | aktive Keilplatte |
| 2 | passive keilplatte |
| 3 | Wälzlagerelemente |
| 4 | Träger |
| 5 | Reibbelag |
| 6 | Bremsgegenstand |
| 10 | Bremsvorrichtung, Keilbremse |
| 20 | gegensinnig verstellte Keilbremsen |
| 21 | vordere Radachse |
| 22 | hintere Radachse |
| 23 | rechtes Vorderrad |
| 24 | linkes Vorderrad |
| 25 | rechtes Hinterrad |
| 26 | linkes Hinterrad |
| 27 | Keilstellung für Selbstverstärkung in Vorwärtsrichtung |
| 28 | Keilstellung für Selbstverstärkung in Rückwärtsrichtung |
| 29 | Vorwärtsrichtung |
| 30 | gleichsinnig verstellte Keilbremsen |
| 40 | Bremskraftdiagramm |
| 41 | Bremskraft für Keilstellung in Fahrtrichtung |
| 42 | Bremskraft für Keilstellung entgegen Fahrtrichtung |
| 43 | Bremskraftdifferenz bei gegensinnig verstellten Keilbremsen ' |
| 44 | Bremskraftdifferenz bei gleichsinnig verstellten Keilbremsen |
| 45 | gemittelte Bremskraftvorgabe pro Bremsgruppe |
| 46 | Gesamtbremskraftvorgabe |
| 47 | keine Bremskraft |
| 50 | Keilverstellungsdiagramm |
| 51 | Verlauf der Keilposition |
| 52 | Neutralstellung |
| 60 | Bremssteuervorrichtung |
| 61 | Umstelleinrichtung |
| 62 | Bremskraftveränderungs-Einrichtung |
| 63 | Speichereinrichtung |
| 64 | Steuersignalausgangseinrichtung |

**Patentansprüche**

1. Verfahren zur Steuerung von elektromechanischen Bremsen einer Fahrzeugbremsanlage, wobei die Bremsen eine erste Betriebsstellung (27) aufweisen, in der eine Selbstverstärkung der Bremswirkung für eine Vorwärtsbewegung eines die Fahrzeugbremsanlage umfassenden Fahrzeugs erzielt wird, und eine zweite Betriebsstellung (28) aufweisen, in der eine Selbstverstärkung der Bremswirkung für eine Rückwärtsbewegung des Fahrzeugs erzielt wird, und wobei das Verfahren Schritte umfasst zum

   - Überführen einer ersten Untergruppe der elektromechanischen Bremsen (10) von einer der beiden Betriebsstellungen (27; 28) in die jeweils andere Betriebsstellung (28; 27) und zum
   - Verändern der von einer zweiten Untergruppe der elektromechanischen Bremsen (10) bewirkten Bremskraft (41) während des Überführens der ersten Untergruppe der elektromechanischen Bremsen von einer der beiden Betriebsstellungen in die jeweils andere Betriebsstellung so, dass die von der Fahrzeugbremsanlage insgesamt aufgebrachte Bremskraft im Wesentlichen der Bremskraftvorgabe (46) für die Fahrzeugbremsanlage entspricht.

2. Verfahren nach Anspruch 1,

**dadurch gekennzeichnet,**

**dass** das Verändern der Bremskraft (41) an der zweiten Untergruppe der elektromechanischen Bremsen die Abweichung der Bremskraft (42) an der ersten Untergruppe der elektromechanischen Bremsen (10) von der Bremskraftvorgabe für die erste Untergruppe der elektromechanischen Bremsen während des Überführens im Wesentlichen kompensiert.

3. Verfahren nach Anspruch 2,
   **dadurch gekennzeichnet,**
   **dass** das Verändern der Bremskraft (41) der zweiten Untergruppe der elektromechanischen Bremsen auf der Grundlage einer vorgegebenen Funktion erfolgt, die die Abweichung der Bremskraft (42) der ersten Untergruppe der elektromechanischen Bremsen von der Bremskraftvorgabe für die erste Untergruppe der elektromechanischen Bremsen während des Überführens von der ersten Betriebsstellung (27) in die zweite Betriebsstellung (28) angibt.

4. Verfahren nach Anspruch 1, 2 oder 3,
   **dadurch gekennzeichnet,**
   **dass** das Verändern der Bremskraft der zweiten Untergruppe der elektromechanischen Bremsen (10) auf der Grundlage einer Messung der aktuellen Bremskraft von wenigstens der ersten Untergruppe der elektromechanischen Bremsen (10) während des Überführens von der ersten Betriebsstellung (27) in die zweite Betriebsstellung (28) vorgenommen wird.

5. Verfahren nach einem der vorangehenden Ansprüche,
   **dadurch gekennzeichnet,**
   **dass** das Überführen der ersten Untergruppe der elektromechanischen Bremsen (10) und das Verändern der Bremskraft der zweiten Untergruppe der elektromechanischen Bremsen (10) während des Überführens so erfolgt, dass die Verteilung der von der Fahrzeugbremsanlage aufgebrachten Bremskraft (46) auf die erste und die zweite Untergruppe der elektromechanischen Bremsen (10) nach erfolgtem Überführen einer vorgegebenen Verteilung entspricht.

6. Verfahren nach einem der vorangehenden Ansprüche,
   **dadurch gekennzeichnet,**
   **dass** das Überführen der ersten Untergruppe der elektromechanischen Bremsen bei einer bestimmten Fahrzeuggeschwindigkeit erfolgt.

7. Verfahren nach einem der vorangehenden Ansprüche,
   **dadurch gekennzeichnet,**
   **dass** das Überführen der ersten Untergruppe der elektromechanischen Bremsen bei einer bestimmten fahrdynamischen Bedingung erfolgt.

8. Vorrichtung zur Steuerung von elektromechanischen Bremsen einer Fahrzeugbremsanlage, wobei die Bremsen eine erste Betriebsstellung (27) aufweisen, in der eine Selbstverstärkung der Bremswirkung für eine Vorwärtsbewegung eines die Fahrzeugbremsanlage umfassenden Fahrzeugs erzielt wird, und eine zweite Betriebsstellung (28) aufweisen, in der eine Selbstverstärkung der Bremswirkung für eine Rückwärtsbewegung des Fahrzeugs erzielt wird, und wobei die Vorrichtung aufweist:

   - eine Umstelleinrichtung (61) zum Überführen einer ersten Untergruppe der elektromechanischen Bremsen (10) von einer der beiden Betriebsstellungen (27; 28) in die jeweils andere Betriebsstellung (28; 27) und
   - eine Bremskraftveränderungs-Einrichtung (62) zum Verändern der von einer zweiten Untergruppe der elektromechanischen Bremsen (10) bewirkten Bremskraft (41) während des Überführens der ersten Untergruppe der elektromechanischen Bremsen von einer der beiden Betriebsstellungen in die jeweils andere Betriebsstellung so, dass die von der Fahrzeugbremsanlage insgesamt aufgebrachte Bremskraft im Wesentlichen der Bremskraftvorgabe (46) für die Fahrzeugbremsanlage entspricht.

9. Vorrichtung nach Anspruch 8,
   **dadurch gekennzeichnet,**
   **dass** die Bremskraftveränderungs-Einrichtung (62) ausgebildet ist, eine Veränderung der Bremskraft der zweiten Untergruppe der elektromechanischen Bremsen (10) nach einem Verfahren gemäß der Ansprüche 2 bis 5 zu bewirken.

**10.** Vorrichtung nach Anspruch 8 oder 9,
**dadurch gekennzeichnet,**
**dass** die Umstelleinrichtung (61) ausgebildet ist, ein Umstellen der ersten Untergruppe der elektromechanischen Bremsen (10) nach einem Verfahren gemäß der Ansprüche 5 oder 6 zu bewirken.

## Claims

**1.** Method for controlling electromechanical brakes of a vehicle brake system, wherein the brakes have a first operating position (27), in which self-boosting of the braking effect is achieved for a forward motion of a vehicle containing the vehicle brake system, and a second operating position (28) in which self-boosting of the braking effect is achieved for a backward motion of the vehicle, and wherein the method comprises steps to:

- switch a first subgroup of the electromechanical brakes (10) from one of the two operating positions (27; 28) to the respective other operating position (28; 27), and to
- vary the braking force (41) exerted by a second subgroup of the electromechanical brakes (10) during the switch of the first subgroup of the electromechanical brakes from one of the two operating positions to the respective other operating position, such that the overall braking force applied by the vehicle brake system substantially always corresponds to the braking force setpoint value (46) for the vehicle brake system.

**2.** Method according to claim 1,
**characterised in that**
the varying of the braking force (41) at the second subgroup of the electromechanical brakes substantially compensates for the deviation of the braking force (42) at the first subgroup of the electromechanical brakes (10) from the braking force setpoint value for the first subgroup of the electromechanical brakes during the switch.

**3.** Method according to claim 2,
**characterised in that**
the varying of the braking force (41) of the second subgroup of the electromechanical brakes takes place on the basis of a predetermined function, which specifies the deviation of the braking force (42) of the first subgroup of the electromechanical brakes from the braking force setpoint value for the first subgroup of the electromechanical brakes during the switch from the first operating position (27) to the second operating position (28).

**4.** Method according to claim 1, 2 or 3,
**characterised in that**
the varying of the braking force of the second subgroup of the electromechanical brakes (10) takes place on the basis of a measurement of the current braking force of at least the first subgroup of the electromechanical brakes (10) during the switch from the first operating position (27) to the second operating position (28).

**5.** Method according to one of the preceding claims,
**characterised in that**
the switching of the first subgroup of the electromechanical brakes (10) and the varying of the braking force of the second subgroup of the electromechanical brakes (10) takes place during the switch, such that the distribution of the braking force (46) applied by the vehicle brake system to the first and second subgroups of the electromechanical brakes (10) after switching corresponds to a predetermined distribution.

**6.** Method according to one of the preceding claims,
**characterised in that**
the switching of the first subgroup of the electromechanical brakes takes place at a specific vehicle speed.

**7.** Method according to one of the preceding claims,
**characterised in that**
the switching of the first subgroup of the electromechanical brakes takes place at a specific driving dynamic condition.

**8.** Device for controlling electromechanical brakes of a vehicle brake system, wherein the brakes have a first operating position (27), in which self-boosting of the braking effect is achieved for a forward motion of a vehicle containing the vehicle brake system, and a second operating position (28) in which self-boosting of the braking effect is achieved for a backward motion of the vehicle, and wherein the device comprises:

- a switching device (61) for switching a first subgroup of the electromechanical brakes (10) from one of the two operating positions (27; 28) to the respective other operating position (28; 27), and

- a braking force varying device (62) for varying the braking force (41) exerted by a second subgroup of the electromechanical brakes (10) during the switch of the first subgroup of the electromechanical brakes from one of the two operating positions to the respective other operating position, such that the overall braking force applied by the vehicle brake system substantially always corresponds to the braking force setpoint value (46) for the vehicle brake system.

9.  Device according to claim 8,
    **characterised in that**
    the braking force varying device (62) is designed to effect a variation in the braking force of the second subgroup of the electromechanical brakes (10) according to a method in accordance with claims 2 to 5.

10. Device according to claim 8 or 9,
    **characterised in that**
    the switching device (61) is designed to effect a switching of the first subgroup of the electromechanical brakes (10) according to a method in accordance with claims 5 or 6.

**Revendications**

1.  Procédé pour la commande de freins électromécaniques d'un système de freinage de véhicule, dans lequel les freins présentent une première position de fonctionnement (27), dans laquelle un auto-renforcement de l'effet de freinage est réalisé pour un déplacement vers l'avant d'un véhicule comprenant le système de freinage du véhicule, et présente une seconde position de fonctionnement (28), dans laquelle un auto-renforcement de l'effet de freinage est réalisé pour un déplacement vers l'arrière du véhicule, et dans lequel le procédé comprend les étapes de

    - transfert d'un premier sous-groupe des freins électromécaniques (10), de l'une des deux positions de fonctionnement (27 ; 28) vers l'autre position respective de fonctionnement (28 ; 27), et
    - modification de la force de freinage (41), provoquée par un second sous-groupe des freins électromécaniques (10) pendant le transfert du premier sous-groupe des freins électromécaniques de l'une des deux positions de fonctionnement vers l'autre position respective de fonctionnement, de telle sorte que la force de freinage globalement appliquée par le système de freinage du véhicule corresponde pour l'essentiel à la valeur spécifiée de la force de freinage (46) pour le système de freinage du véhicule.

2.  Procédé selon la revendication 1, **caractérisé en ce que** la modification de la force de freinage (41) au niveau du second sous-groupe des freins électromécaniques compense pour l'essentiel, pendant le transfert, l'écart entre la force de freinage (42) au niveau du premier sous-groupe des freins électromécaniques (10), et la valeur spécifiée de la force de freinage pour le premier sous-groupe des freins électromécaniques.

3.  Procédé selon la revendication 2, **caractérisé en ce que** la modification de la force de freinage (41) du second sous-groupe des freins électromécaniques a lieu sur la base d'une fonction prédéfinie, qui donne l'écart entre la force de freinage (42) du premier sous-groupe des freins électromécaniques et la valeur spécifiée de la force de freinage pour le premier sous-groupe des freins électromécaniques pendant le transfert de la première position de fonctionnement (27) vers la seconde position de fonctionnement (28).

4.  Procédé selon la revendication 1, 2 ou 3, **caractérisé en ce que** la modification de la force de freinage du second sous-groupe des freins électromécaniques (10) est mise en oeuvre sur la base d'une mesure de la force de freinage effective d'au moins le premier sous-groupe des freins électromécaniques (10) pendant le transfert de la première position de fonctionnement (27) vers la seconde position de fonctionnement (28).

5.  Procédé selon l'une des revendications précédentes, **caractérisé en ce que** le transfert du premier sous-groupe des freins électromécaniques (10) et la modification de la force de freinage du second sous-groupe des freins électromécaniques (10) pendant le transfert a lieu de telle sorte que la répartition de la force de freinage (46) appliquée par le système de freinage du véhicule, entre le premier et le second sous-groupes des freins électromécaniques (10), corresponde, après la fin du transfert, à une répartition prédéfinie.

6.  Procédé selon l'une des revendications précédentes, **caractérisé en ce que** le transfert du premier groupe des freins électromécaniques s'effectue pour une certaine vitesse du véhicule.

7. Procédé selon l'une des revendications précédentes, **caractérisé en ce que** le transfert du premier sous-groupe des freins électromécaniques s'effectue pour une certaine condition de la dynamique du mouvement du véhicule.

8. Dispositif pour la commande de freins électromécaniques d'un système de freinage de véhicule, dans lequel les freins présentent une première position de fonctionnement (27), dans laquelle un auto-renforcement de l'effet de freinage est réalisé pour un déplacement vers l'avant d'un véhicule comprenant le système de freinage du véhicule, et présente une seconde position de fonctionnement (28), dans laquelle un auto-renforcement de l'effet de freinage est réalisé pour un déplacement vers l'arrière du véhicule, et dans lequel le dispositif comprend :

   - un dispositif de commutation (61), pour transférer un premier sous-groupe des freins électromécaniques (10) de l'une des deux positions de fonctionnement (27 ; 28) vers l'autre position respective de fonctionnement (28 ; 27), et
   - un dispositif de modification de la force de freinage (62), pour modifier la force de freinage (41) provoquée par un second sous-groupe des freins électromécaniques (10), pendant le transfert du premier sous-groupe des freins électromécaniques de l'une des deux positions de fonctionnement vers l'autre position respective de fonctionnement, de telle sorte que la force de freinage globalement appliquée par le système de freinage du véhicule corresponde pour l'essentiel à la valeur spécifiée de la force de freinage (46) pour le système de freinage du véhicule.

9. Dispositif selon la revendication 8, **caractérisé en ce que** le dispositif de modification de la force de freinage (62) est configuré de façon à provoquer une modification de la force de freinage du second sous-groupe des freins électromécaniques (10) selon un procédé selon les revendications 2 à 5.

10. Dispositif selon la revendication 8 ou 9, **caractérisé en ce que** le dispositif de commutation (61) est configuré de façon à provoquer une commutation du premier sous-groupe des freins électromécaniques (10) selon un procédé selon les revendications 5 ou 6.

# FIG 1A

10

4
2
3
1
5

3

6

# FIG 1B

10

4
2
3

3

1
5

6

# FIG 1C

10

4
2

3
3
1
5

6

FIG 2

20

FIG 3

30

FIG 4

FIG 5

# FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0953785 A
- US 6305506 B1
- US 20030205438 A1
- FR 2885976
- DE 10218825 A1